**Europäisches Patentamt**

**European Patent Office**

**Office européen des brevets**

(19)

(11) Veröffentlichungsnummer: **0 188 009**
**B1**

(12) # EUROPÄISCHE PATENTSCHRIFT

(45) Veröffentlichungstag der Patentschrift:
**18.01.89**

(51) Int. Cl.⁴: **G 01 N 21/03**

(21) Anmeldenummer: **85116672.8**

(22) Anmeldetag: **31.12.85**

(54) **Küvettenanordnung.**

(30) Priorität: **16.01.85 DE 8500884 U**

(43) Veröffentlichungstag der Anmeldung:
**23.07.86 Patentblatt 86/30**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 114 056**
**WO-A-84/02775**
**DE-A- 2 435 317**
**DE-A- 2 819 820**

(73) Patentinhaber: **BEHRINGWERKE Aktiengesellschaft,
Postfach 1140, D-3550 Marburg 1 (DE)**

(72) Erfinder: **Hissung, Alfred René, Dr., Am Ziegenberg 8,
D-3550 Marburg-Marbach (DE)**

(74) Vertreter: **Meyer-Dulheuer, Karl-Hermann, Dr. et al,
HOECHST Aktiengesellschaft Zentrale Patentabteilung
Postfach 80 03 20, D-6230 Frankfurt/Main 80 (DE)**

ACTORUM AG

## Beschreibung

Die Erfindung betrifft eine Küvettenanordnung für optische Untersuchungen mit Küvettenhalter zur Aufnahme der Küvetten, wobei die Küvetten mit Hilfe von Verbindungselementen zu Streifen aufgereiht sind.

Küvettenanordnungen der genannten Art sind aus der deutschen Offenlegungsschrift 2 435 317 bekannt. Nachteilig bei dieser Anordnung ist, dass die einzelnen Küvetten, die durch Stege miteinander verbunden sind, so zueinander angeordnet sind, dass sie nicht eindeutig in einen Küvettenhalter eingeführt werden können. Vertauschungen sind somit nicht ausgeschlossen.

Aus der EP-A-114 056 ist ein Probensammler bekannt, bei dem in jeder Reihe der Probengefässkassette eine der Ausnehmungen eine von den übrigen abweichende (geometrische) Form aufweist und asymmetrisch in der Reihe angeordnet ist. Von den zu Streifen aufgereihten Probengefässen ist ein Probengefäss in gleicher Weise asymmetrisch angeordnet und besitzt einen Boden, der geometrisch der Form der asymmetrisch angeordneten und von den übrigen abweichenden Ausnehmung entspricht.

Es besteht demnach die Aufgabe, eine Küvettenanordnung zu schaffen, mit der sichergestellt werden kann, dass die einzelnen Küvetten immer nur in ein und derselben Reihenfolge vom Küvettenhalter aufgenommen werden.

Die Aufgabe wird durch eine Küvettenanordnung gelöst, die dadurch gekennzeichnet ist, dass die einzelnen Küvetten durch Verbindungselemente in unterschiedlichem Abstand zueinander gehalten werden und der Küvettenhalter mit in Reihe angeordneten Küvettenschächten versehen ist, deren Abstände denen der Küvetten entsprechen.

Die Verbindungselemente können aus einer mit Öffnungen versehenen Kassette bestehen, wobei die Öffnungen unterschiedlichen Abstand aufweisen. Die Verbindungselemente können jedoch auch aus Stegen unterschiedlicher Breite bestehen. Die Stege können Sollbruchstellen aufweisen und parallel zur Längsachse der Küvette angeordnet sein. Die Küvettenschächte können mit Einrichtungen zum Beheizen und Kühlen der Küvetten versehen sein.

Die Erfindung wird im folgenden anhand von lediglich einen Ausführungsweg darstellenden Zeichnungen näher erläutert. Es zeigt:

Fig. 1 die zu Streifen aufgereihten einzelnen Küvetten mit dem dazugehörigen Küvettenhalter,

Fig. 2 eine weitere Ausführungsform der zu Streifen aufgereihten Küvetten.

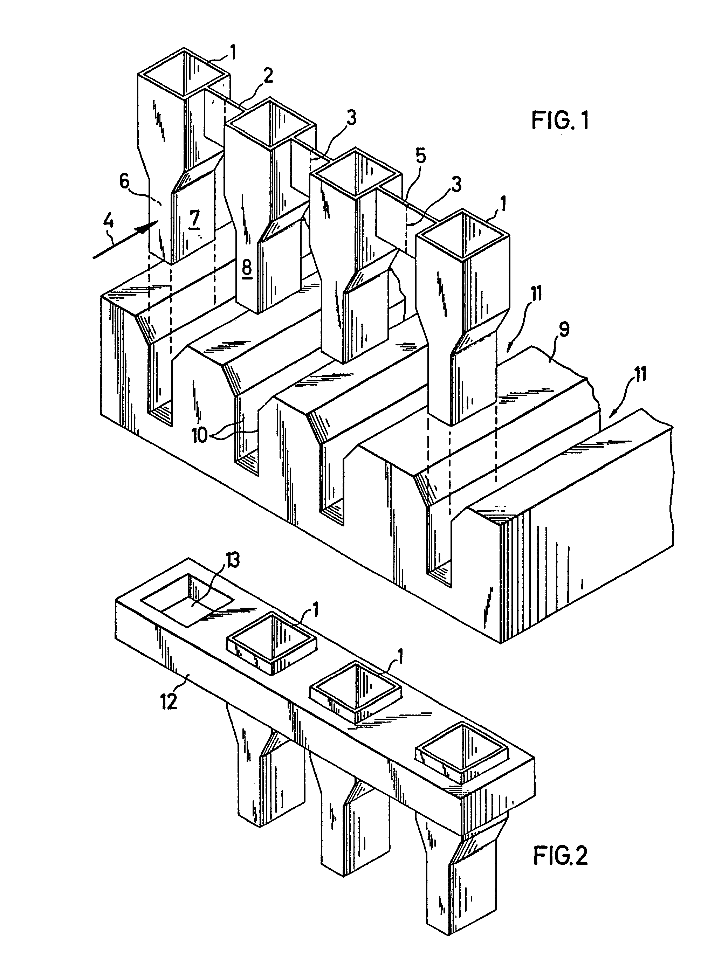

Die Küvettenanordnung besteht aus den einzelnen Küvetten 1 und dem Küvettenhalter 9. Die Küvetten 1 sind zu Streifen aufgereiht und durch Verbindungselemente 2, 5 bzw. 12 in unterschiedlichem Abstand zueinander gehalten. Wie in Figur 1 gezeigt, können die Verbindungselemente aus Stegen 2, 5 unterschiedlicher Breite bestehen. Die Stege 2, 5 können mit Sollbruchlinien 3 versehen sein. Diese können, wie in Figur 1 dargestellt, mittig im Steg, aber auch in dem Bereich des Steges angeordnet sein, der an die Küvette grenzt. Die Stege können parallel zur Längsachse der Küvette aber auch senkrecht zu ihr (nicht dargestellt) angeordnet sein. Der Küvettenhalter ist mit in Reihe angeordneten Küvettenschächten 11 versehen, deren Abstände denen der Küvetten entsprechen. Um das Ein- und Ausführen der Küvetten in die Küvettenschächte 11 zu erleichtern, kann es zweckmässig sein, deren seitliche Wände 10 und die seitlichen Wände 6 und 7 der Küvette 1 leicht gegeneinander zu neigen. Die optischen Fenster sind mit 8 gekennzeichnet und die Strahlrichtung mit 4.

Bei der Variante gemäss Figur 2 besteht das Verbindungselement für die Küvetten 1 aus einer Kassette 12, die mit Öffnungen 13 zur Aufnahme der Küvetten 1 versehen ist. Die Öffnungen 13 haben unterschiedlichen Abstand zueinander und zwar entsprechend den Abständen der Küvettenschächte 11 in der Küvettenhalterung 9. Die Küvettenschächte 11 können mit Einrichtungen zum Beheizen und Kühlen der Küvetten versehen sein (nicht dargestellt).

## Patentansprüche

1. Küvettenanordnung für optische Untersuchungen mit Küvettenhalter zur Aufnahme der Küvetten, wobei die Küvetten mit Hilfe von Verbindungselementen zu Streifen aufgereiht sind, dadurch gekennzeichnet, dass die einzelnen Küvetten (1) durch die Verbindungselemente (2, 5, 12) in unterschiedlichem Abstand zueinander gehalten werden und der Küvettenhalter (9) mit in Reihe angeordneten Küvettenschächten (11) versehen ist, deren Abstände denen der Küvetten entsprechen.

2. Küvettenanordnung nach Anspruch 1, dadurch gekennzeichnet, dass die Verbindungselemente aus einer mit Öffnungen (13) versehenen Kassette (12) bestehen, wobei die Öffnungen (13) unterschiedlichen Abstand voneinander aufweisen.

3. Küvettenanordnung nach Anspruch 1, dadurch gekennzeichnet, dass die Verbindungselemente aus Stegen (2, 5) unterschiedlicher Länge bestehen.

4. Küvettenanordnung nach Anspruch 3, dadurch gekennzeichnet, dass die Stege (2, 5) an den Seitenwänden (6, 7) der Küvetten (1) parallel zur Längsachse der Küvetten (1) angebracht sind.

5. Küvettenanordnung nach Anspruch 3, dadurch gekennzeichnet, dass die Stege (2, 5) Sollbruchstellen (3) aufweisen.

6. Küvettenanordnung nach Anspruch 1, dadurch gekennzeichnet, dass die Küvettenschächte (11) mit Einrichtungen zum Heizen und Kühlen versehen sind.

## Claims

1. An arrangement of cuvettes for optical investigations, with a cuvette holder to receive the cuvettes, the cuvettes being arranged in strips with the aid of connnecting elements, wherein the individual cuvettes (1) are held at different spacings from one another by the connecting elements (2, 5, 12), and the cuvette holder (9) is provided with cuvette wells (11), which are disposed in sequence and the spacings of which correspond to those of the cuvettes.

2. The arrangement of cuvettes as claimed in claim 1, wherein the connecting elements consist of a frame (12) provided with apertures (13), the apertures (13) having different spacings from one another.

3. The arrangement of cuvettes as claimed in claim 1, wherein the connecting elements consist of webs (2, 5) of different length.

4. The arrangement of cuvettes as claimed in claim 3, wherein the webs (2, 5) on the lateral walls (6, 7) of the cuvettes (1) are disposed parallel to the longitudinal axis of the cuvettes (1).

5. The arrangement of cuvettes as claimed in claim 3, wherein the webs (2, 5) exhibit predetermined breaking points (3).

6. The arrangement of cuvettes as claimed in claim 1, wherein the cuvette wells (11) are provided with arrangements for heating and cooling.

**Revendications**

1. Agencement de cuvettes pour examens optiques comportant un support de cuvette destiné à recevoir les cuvettes (1) qui sont disposées en bandes à l'aide d'éléments de liaison, caractérisé en ce que les différentes cuvettes (1) sont maintenues par les éléments de liaison (2, 5, 12) à des distances différentes les unes des autres et en ce que le support de cuvette (9) est pourvu de puits de cuvette (11) disposés en série, dont les distances correspondent à celles des cuvettes.

2. Agencement de cuvettes selon la revendication 1, caractérisé en ce que les éléments de liaison sont constitués d'une cassette (12) pourvue d'ouvertures (13), les ouvertures (13) étant différemment espacées les unes des autres.

3. Agencement de cuvettes selon la revendication 1, caractérisé en ce que les éléments de liaison sont constitués d'entretoises (2, 5) de longueur différente.

4. Agencement de cuvettes selon la revendication 3, caractérisé en ce que les entretoises (2, 5) sur les parois latérales (6, 7) des cuvettes (1), sont parallèles à l'axe longidudinal des cuvettes (1).

5. Agencement de cuvettes selon la revendication 3, caractérisé en ce que les entretoises (2, 5) présentent des points de rupture (3).

6. Agencement de cuvettes selon la revendication 1, caractérisé en ce que les puits de cuvette (11) sont pourvus de dispositifs de chauffage et de refroidissement.

FIG.1

FIG.2